# EUROPÄISCHE PATENTSCHRIFT

(11) **EP 2 567 947 B1**
(45) Veröffentlichungstag und Bekanntmachung des Hinweises auf die Patenterteilung: **14.01.2015**
(21) Anmeldenummer: 12182943.6
(22) Anmeldetag: 04.09.2012
(51) Int. Cl.: C04B 103/00, C04B 111/00, C04B 28/10, C04B 40/06

(54) **Kalkfrischmörtelgebinde**
Chalk fresh mortar receptacle
Emballage de mortier à la chaux

(30) Priorität: 06.09.2011 DE 102011113035
(43) Veröffentlichungstag der Anmeldung: 13.03.2013
(73) Patentinhaber: Fels-Werke GmbH, 38640 Goslar (DE)
(72) Erfinder: Boenkendorf, Ulf Dr., 31188 Holle (DE); Stumpf Thomas Dr., 38667 Bad Harzburg (DE)
(74) Vertreter: Solf, Alexander

(56) Entgegenhaltungen:
- WO-A1-02/06182
- FR-A1- 2 550 525
- J.Lenz, D. Knöfel: "Anforderungsprofil für Restaurierungsmörtel (DEIRB 16/2002-52)", Fraunhofer IRB , 2002, XP002694247, Gefunden im Internet: URL:http://www.baufachinformation.de/denkm alpflege/Anforderungsprofil-für-Restaurier ungsmörtel/2003027116043 [gefunden am 2013-03-21]

## Beschreibung

Die Erfindung betrifft ein wasserdichtes Gebinde mit einem verarbeitungsfertigen Wasser enthaltenden Kalkfrischmörtel.

Gebinde mit einem Wasser enthaltenden verarbeitungsfertigen Kalkfrischmörtel sind bekannt. Sie weisen ein wasserdichtes und verschlossenes sackartiges Behältnis aus einem flexiblen Material aus Kunststoff auf, in welchem ein Kalkfrischmörtel zumindest aus Kalkhydrat, Zuschlagstoff und Wasser enthalten ist. Gegebenenfalls enthält der Frischmörtel noch bestimmte Zusatzmittel.

Das Gebinde wird auf der Baustelle geöffnet und der kellengerechte Mörtel ohne weiteres verarbeitet.

Nachteilig ist, dass der carbonatisch erhärtende Kalkmörtel nur geringe Druckfestigkeiten bis zu 2 N/mm² und nur geringe Haftscherfestigkeiten bis zu 0,2 N/mm² erreicht und daher nur als Mauermörtel in Ausnahmefällen, wie beispielsweise bei der Denkmalspflege eingesetzt werden kann. Keinesfalls ist der bekannte Kalkfrischmörtel wegen seiner geringen Festigkeitseigenschaften als Dünnbettmörtel für Mauerwerk mit Mörtelfugen bis maximal 3 mm verwendbar, wie sie beispielsweise bei der Vermauerung von Porenbetonplansteinen, Planziegeln oder Fliesen ausgebildet werden.

Aufgabe der Erfindung ist, ein Gebinde mit einem verarbeitungsfähigen Wasser enthaltenden Frischmörtel zu schaffen, der nach seiner Erhärtung höhere Druckfestigkeiten und Haftscherfestigkeiten erbringt und als Dünnbettmörtel verwendet werden kann.

Diese Aufgabe wird durch die Merkmale des Anspruchs 1 gelöst. Vorteilhafte Weiterbildungen der Erfindung werden in den Unteransprüchen gekennzeichnet.

Der erfindungsgemäße carbonatisch erhärtende Kalkfrischmörtel weist neben Wasser im Wesentlichen Kalkhydrat und einen Zuschlagstoff üblicher Gesteinskörnung gemäß EN 12620 und EN 13139 oder Leichtzuschlagstoffe üblicher Gesteinskörnung nach DIN 4226 auf. Vorzugsweise kann der erfindungsgemäße Kalkfrischmörtel üblicherweise verwendete Zusatzmittel z. B. Methylcellulose, Stärkeether, Verflüssiger, Schichtsilikate wie Bentonit oder andere bauchemische Verarbeitungs- und eigenschaftsfördernde Additive aufweisen.

Für Frischmörtel, die als Dünnbettmörtel konzipiert sind, werden die Zuschlagstoffe mit Korngrößen unter 3 mm verwendet.

Die Erfindung sieht vor, dass der Kalkfrischmörtel zur Steigerung insbesondere der Druckfestigkeit und der Haftscherfestigkeit mindestens eine Dispersion z. B. auf einer Polymerbasis von Vinylacetat-Ethylen und/oder Styrol-Acrylat und/oder Vinylchlorid-Ethylen enthält. Die Dispersion ist aus einem Zusatz eines oder mehrerer Dispersionspulver und/oder aus einem Zusatz einer oder mehrerer flüssiger Dispersionen bei der Herstellung des Frischmörtels entstanden.

Derartige Dispersionspulver bzw. Dispersionen werden u. a. verwendet für Fliesenkleber, Fugenmörtel, Selbstverlaufsmassen, Wand- und Fugenspachtelmassen, Wärmeverbundsysteme, Putze od. dgl. Sie verleihen diesen Produkten eine höhere Kohäsion, Flexibilität, Elastizität und eine bessere Haftung der Frischmasse auf einem Untergrund. Zudem kann die Verarbeitbarkeit verbessert werden. In jedem Fall aber wird die Festigkeit der erhärteten Mörtel reduziert.

Es ist deshalb überraschend, dass der Zusatz von Dispersionspulver und/oder von Dispersionen bei der Frischmörtelzubereitung bei der Erhärtung der erfindungsgemäßen Kalkfrischmörtel eine Erhöhung der Festigkeiten bewirken.

Bevorzugte Rezepturen für erfindungsgemäße Kalk-Dünnbettfrischmörtel werden in der folgenden Tabelle aufgeführt, wobei die Mengenangaben in Gew.-% angegeben und auf die Trockensubstanz bezogen sind.

| **Bestandteilart** | **Bestandteil** | **min** | **max** |
|---|---|---|---|
| Bindemittel | Weißkalkhydrat | 10 | 25 |
| Füllstoff | Kalksteinmehl < 90 µm | 8 | 30 |
| Zuschlag | Quarzsand und/oder Kalksteinbrechsand 0,1-0,5 mm | 20 | 75 |
| | Quarzsand und/oder Kalksteinbrechsand 0,5-1,0 mm | 0 | 40 |
| Additive | Dispersionspulver | 1 | 4 |
| | Verflüssiger | 0 | 1 |
| | Methylcellulose | 0,1 | 0,4 |

Die Mörtel, die in die oben angegebenen Rezepturen fallen, erreichen nach 28 Tagen eine Druckfestigkeit von mindestens 2,0, insbesondere von mindestens 2,5 N/mm² und eine Haftscherfestigkeit von mindestens 0,3, insbesondere von mindestens 0,4 N/mm². Die Druckfestigkeit wurde gemessen nach EN 196-1 und die Haftscherfestigkeit nach EN 1052-3. Dabei ist abweichend jeweils von der Prüfnorm nicht bei > 90 % relative Feuchte, sondern bei Raumklima mit 20° C und 65 % Luftfeuchtigkeit gelagert worden, da für carbonatisch erhärtende Bindemittel als auch für die verwendeten Additive eine Nasslagerung nicht möglich ist (EN 1015-11 zur Erhärtung von Luftkalkmörteln durch Carbonatisierung). Die auf dem Markt befindlichen Kalkfrischmörtel erbringen eine maximale Druckfestigkeit von 1 - 2 und eine Haftscherfestigkeit von ≤ 0,2 N/mm².

Der Wassergehalt der erfindungsgemäßen Kalkfrischmörtel im Behältnis liegt vorzugsweise zwischen 15 und 40, insbesondere zwischen 25 und 35 Gew.-%. Als Behältnis wird vorzugsweise ein verschweißter Kunststoffsack verwendet. Das Gewicht eines erfindungsgemäßen Gebindes liegt vorzugsweise zwischen 5 und 25, insbesondere zwischen 10 und 20 kg.

Als Dispersionspulver und/oder als Dispersion werden vorzugsweise Produkte auf Basis von Vinylacetat-Ethylen-Copolymeren verwendet, die z. B. unter dem Markennamen "Vinnapas" vermarktet werden von der Firma Wacker Chemie AG, Hans-Seidel-Platz 4, 81737 München. Besonders effektiv ist das Produkt "Vinnapas 5021 T" oder "Vinnapas 825 ED".

## Patentansprüche

1. Wasserdichtes Gebinde mit einem verarbeitungsfertigen Wasser enthaltenden Kalkfrischmörtel zumindest aufweisend Kalkhydrat und einen Zuschlagstoff sowie Wasser,
**dadurch gekennzeichnet, dass**
- die Mischung aus den angegebenen Stoffen eine die Druckfestigkeit und die Haftscherfestigkeit erhöhende Dispersion aufweist,
- die Dispersion eine Dispersion auf einer Polymerbasis von Vinylacetat-Ethylen und/oder Styrol-Acrylat und/oder Vinylchlorid-Ethylen ist,
- der Kalkfrischmörtel 10 bis 25 Gew.-% Weißkalkhydrat, bezogen auf die Trockensubstanz enthält,
- der Kalkfrischmörtel Quarzsand und/oder Kalksteinbrechsand mit einer Körnung zwischen 0,1 und 0,5 mm von 20 bis 75 Gew.-%, bezogen auf die Trockensubstanz und Quarzsand und/oder Kalksteinbrechsand mit einer Körnung zwischen 0,5 und 1,0 mm in einer Menge von 0 bis 40 Gew.-%, bezogen auf die Trockensubstanz enthält,
- der Kalkfrischmörtel Dispersionsbestandteile in einer Menge von 1 bis 4 Gew.-%, bezogen auf die Trockensubstanz aufweist,
- der Kalkfrischmörtel einen Wassergehalt zwischen 15 und 40, insbesondere zwischen 25 und 35 Gew.-% aufweist,
- das Gewicht des Gebindes zwischen 5 und 25, insbesondere zwischen 10 und 20 kg liegt.

2. Gebinde nach Anspruch 1,
**dadurch gekennzeichnet,dass**
der Kalkfrischmörtel Kalksteinmehl in Mengen zwischen 8 und 30 Gew.-%, bezogen auf die Trockensubstanz enthält.

3. Gebinde nach einem oder mehreren der Ansprüche 1 und/oder 2,
**dadurch gekennzeichnet, dass**
der Kalkfrischmörtel Methylcellulose in einer Menge von 0,1 bis 0,4 Gew.-%, bezogen auf die Trockensubstanz enthält.

4. Gebinde nach einem oder mehreren der Ansprüche 1 bis 3,
**dadurch gekennzeichnet, dass**
der Kalkfrischmörtel ein Verflüssiger bis 1 Gew.-%, bezogen auf die Trockensubstanz enthält.

5. Gebinde nach einem oder mehreren der Ansprüche 1 bis 4,
**dadurch gekennzeichnet, dass**
das Behältnis des Gebindes aus einem flexiblen, sackförmigen Kunststoff besteht.

## Claims

1. Watertight container with a ready-to-use, water-containing fresh lime mortar at least comprising lime hydrate and an aggregate plus water, **characterized in that**
- the mixture of the stated substances comprises a dispersion which increases compressive strength and adhesive shear strength,
- the dispersion is a dispersion on a polymer basis of vinyl acetate-ethylene and/or styrene-acrylate and/or vinyl chloride-ethylene,
- the fresh lime mortar contains 10 to 25 wt% of white lime hydrate, based on the solids content,
- the fresh lime mortar contains silica sand and/or crushed limestone sand with a particle size between 0.1 and 0.5 mm of 20 to 75 wt%, based on the solids content, and silica sand and/or crushed limestone sand with a particle size between 0.5 and 1.0 mm in an amount of 0 to 40 wt%, based on the solids content,
- the fresh lime mortar comprises dispersion constituents in an amount of 1 to 4 wt%, based on the solids content,
- the fresh lime mortar has a water content of between 15 and 40, more particularly between 25 and 35, wt%,
- the weight of the container is between 5 and 25, more particularly between 10 and 20, kg.

2. Container according to Claim 1, **characterized in that** the fresh lime mortar contains finely ground limestone in amounts of between 8 and 30 wt%, based on the solids content.

3. Container according to one or more of Claims 1 and/or 2, **characterized in that** the fresh lime mortar contains methylcellulose in an amount of 0.1 to 0.4 wt%, based on the solids content.

4. Container according to one or more of Claims 1 to 3, **characterized in that** the fresh lime mortar contains a plasticizer at up to 1 wt%, based on the solids content.

5. Container according to one or more of Claims 1 to 4, **characterized in that** the receptacle of the container consists of a flexible plastic in bag form.

## Revendications

1. Emballage étanche à l'eau comportant un mortier frais à la chaux contenant de l'eau, prêt à l'emploi, présentant au moins de l'hydrate de chaux et un adjuvant tel que l'eau,
**caractérisé en ce que**
- le mélange des matériaux indiqués présente une dispersion augmentant la résistance à la pression et la contrainte d'adhérence au cisaillement,
- la dispersion est une dispersion à base de polymère d'acétate de vinyle-éthylène et/ou de styrène-acrylate et/ou de chlorure de vinyle-éthylène,
- le mortier frais à la chaux contient 10 à 25 % en poids d'hydrate de chaux blanche, par rapport à la substance sèche,
- le mortier frais à la chaux contient du sable siliceux et/ou du sable de concassage de calcaire présentant une granulométrie comprise entre 0,1 et 0,5 mm de 20 à 75 % en poids par rapport à la substance sèche et du sable siliceux et/ou du sable de concassage de calcaire présentant une granulométrie comprise entre 0,5 et 1,0 mm en une quantité de 0 à 40 % en poids par rapport à la substance sèche,
- le mortier frais à la chaux présente des composants de dispersion en une quantité de 1 à 4 % en poids par rapport à la substance sèche,
- le mortier frais à la chaux présente une teneur en eau comprise entre 15 et 40, en particulier entre 25 et 35 % en poids,
- le poids de l'emballage se situe entre 5 et 25, en particulier entre 10 et 20 kg.

2. Emballage selon la revendication 1,
**caractérisé en ce que**
le mortier frais à la chaux contient de la farine de calcaire en des quantités comprises entre 8 et 30 % en poids par rapport à la substance sèche.

3. Emballage selon une ou plusieurs des revendications 1 et/ou 2,
**caractérisé en ce que**
le mortier frais à la chaux contient de la méthylcellulose en une quantité de 0,1 à 0,4 % en poids par rapport à la substance sèche.

4. Emballage selon une ou plusieurs des revendications 1 à 3,
**caractérisé en ce que**
le mortier frais à la chaux contient un fluidifiant allant jusqu'à 1 % en poids par rapport à la substance sèche.

5. Emballage selon une ou plusieurs des revendications 1 à 4,
**caractérisé en ce que**
le contenant de l'emballage est constitué d'une matière plastique souple formant un sac.
